# EUROPEAN PATENT APPLICATION

(11) **EP 2 720 444 A1**
(43) Date of publication of application: **16.04.2014**
(21) Application number: 12188044.7
(22) Date of filing: 10.10.2012
(51) Int. Cl.: H04M 1/67, H04M 1/725

(54) **Mobile wireless communications device providing security features based upon wearable near field communication "NFC" device**

(71) Applicant: BlackBerry Limited, Waterloo, ON N2K 0A7 (CA)
(72) Inventor: Tang, Yu, Waterloo, Ontario N2L 3W8 (CA)
(74) Representative: Noble, Nicholas

(57) **Abstract**

A system (30) may include at least one wearable near field communication "NFC" device (31) including a carrier (32) capable of being worn adjacent to a hand, a sensor (34) coupled to the carrier (32) and capable of sensing positioning adjacent to the hand, and a first NFC transceiver (33) coupled to the carrier (32) and the sensor (34). The system (30) may further include a mobile wireless communications device (35) including a second NFC transceiver (36) capable of communicating with the first NFC transceiver (33), and a processor (37) coupled to the second NFC transceiver (36) and being capable of switching from a security mode to a normal operating mode based upon the sensor (34) sensing positioning adjacent to the hand and the second NFC transceiver (36) establishing NFC communication with the first NFC transceiver (33).

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile communications devices. This short-range high frequency wireless communications technology exchanges data between devices over a short distance, such as only a few centimeters.

### Brief Description of the Drawings

FIG. 1 is a schematic block diagram of a system including a wearable NFC device and a mobile wireless communications device in accordance with an example embodiment.

FIG. 2 is a front view of an example embodiment of the system of FIG. 1.

FIGS. 3a and 3b are front views of another example embodiment of the system of FIG. 1.

FIG. 4 is a cross-sectional view of an example embodiment of a wearable NFC device which may be used with the system of FIGS. 3a and 3b.

FIGS. 5 and 6 are flow diagrams illustrating method aspects associated with the systems of FIGS. 1-3b.

FIG. 7 is a schematic block diagram illustrating example components of a mobile wireless communications device which may be used with the systems FIGS. 1-3b.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicated similar elements or steps in different embodiments.

Generally speaking, a system is provided herein which may include at least one wearable near field communication (NFC) device including a carrier capable of being worn adjacent to a hand, a sensor coupled to the carrier and capable of sensing positioning adjacent to the hand, and a first NFC transceiver coupled to the carrier and the sensor. The system may further include a mobile wireless communications device including a second NFC transceiver capable of communicating with the first NFC transceiver, and a processor coupled to the second NFC transceiver and being capable of switching from a security mode to a normal operating mode based upon the sensor sensing positioning adjacent to the hand and the second NFC transceiver establishing NFC communication with the first NFC transceiver.

The at least one wearable NFC device may include a plurality thereof each having a different mobile device operation associated therewith, and the processor may be capable of performing a respective mobile device operation upon switching to the normal operating mode for a given wearable NFC device within NFC communication range of the second NFC transceiver. By way of example, the sensor may include a temperature sensor, a pressure sensor, etc. Also by way of example, the carrier may include a ring. The at least one wearable NFC device may further include an adhesive layer coupled to the carrier and capable of attaching the carrier to the hand.

The processor may be further capable of switching from the normal operating mode to the security mode based upon the first NFC transceiver being outside of a communication range of the second NFC device. More particularly, the processor may be capable of switching from the normal operating mode to the security mode based upon the first NFC transceiver being outside of a communication range of the second NFC device and after a delay period. The mobile wireless communications device may further include an input device coupled to the processor and capable of receiving an input, and the processor may be capable of switching from the security mode to the normal operating mode also based upon the input device. The processor may be further capable of generating an alert based upon the input from the input device and the first NFC transceiver being outside of a communication range of the second NFC device

A related mobile wireless communications device, and a related wearable NFC device, such as those described briefly above, are also provided. Furthermore, a method for using the mobile wireless communications device, and a related computer-readable medium for the mobile wireless communications device, are also provided.

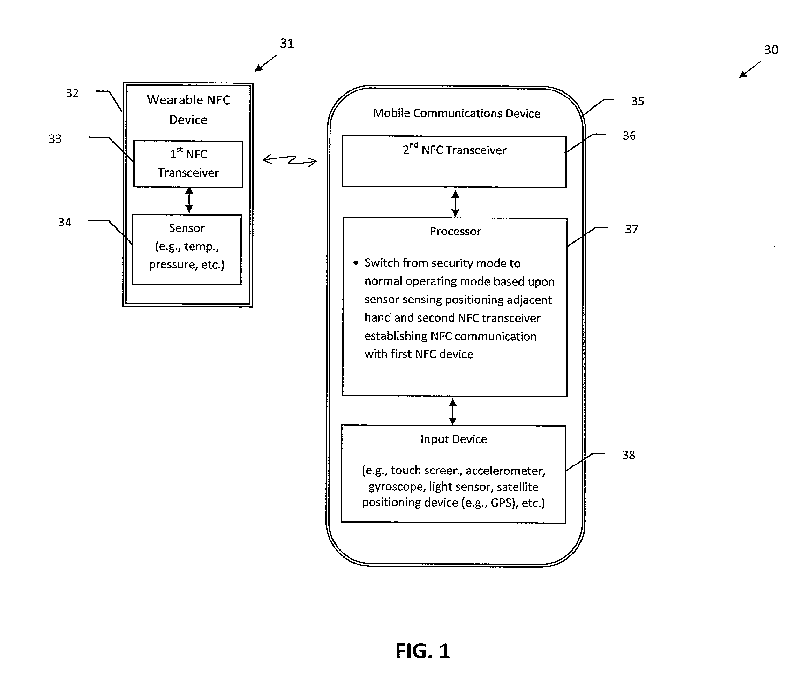

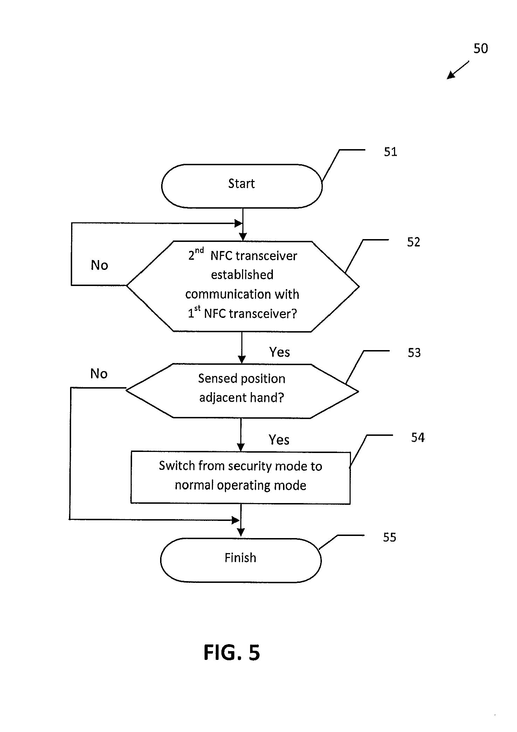

Referring initially to FIG. 1 and the flow diagram **50** of FIG. 5, a communications system **30** and related method aspects are first described. The system **30** illustratively includes a wearable NFC device **31** including a carrier **32** capable of being worn adjacent to a hand, a sensor **34** coupled to the carrier and capable of sensing positioning adjacent to the hand, and a first NFC transceiver **34** (which may include NFC control circuitry) coupled to the carrier and the sensor. The system **30** further illustratively includes a mobile wireless communications device **35** (also referred to as a "mobile device" herein) including a second NFC transceiver **36** (which may also include NFC control circuitry) capable of communicating with the first NFC transceiver **33,** and a processor **37** coupled to the second NFC transceiver. Example mobile devices **35** may include portable or personal media players (e.g., music or MP3 players, video players, etc.), portable gaming devices, portable or mobile telephones, smartphones, tablet computers, digital cameras, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

Many mobile devices use password-based security. This approach may be problematic when the required password is complex, as it may therefore be easy to forget. Furthermore, it may be difficult to enter passwords on certain mobile devices, particularly devices which use a touch screen for data input.

Rather than requiring password-based authentication, beginning at Block **51,** the processor **37** may be capable of or configured to switch from a security mode to a normal operating mode based upon the second NFC transceiver **36** establishing NFC communication with the first NFC transceiver **33,** and the sensor **34** sensing positioning adjacent to the hand, at Blocks **52-54.** In the security mode, one or more device operations (e.g., phone calls, running applications, Web browsing, texting or emailing, etc.) are locked or prohibited from use, whereas in a normal operating mode such operations may be enabled for use. Considered in other terms, the processor **37** may switch from the security mode to the normal operating mode when it has been established that the mobile device **35** is close by (i.e., within several centimeters, the effective range of NFC), and when it has been determined that the wearable NFC device **31** is likely being worn on or adjacent to the hand of a user, as indicated by the sensor **34.** The method illustrated in FIG. 5 is concluded at Block **55.**

By way of example, the wearable NFC device **31** may take various forms, such as fingernail tips, rings, bands (e.g., watch bands or bracelets), stickers, gloves, etc. In one example embodiment, the first NFC transceiver **33** may be included with the wearable NFC device **31,** which may comprise a passive tag that is powered by a field generated by the second NFC transceiver **36** (which serves as the active device or reader). This may be beneficial in that a battery need not be included in the wearable NFC device **31,** allowing its form factor to be relatively small to more easily fit on a finger, for example. However, in some embodiments the first NFC transceiver **33** may comprise an active device, and the second NFC transceiver **36** may operate as a passive device as well.

By including the first NFC transceiver **33** in the wearable NFC device **31,** an identification (ID) associated with the NFC transceiver may then be used as a key to switch the processor from the security mode to the normal operating mode, in lieu of (or in addition to, in some embodiments) a password. Since the wearable NFC device **31** is likely to remain in the authorized user's possession (i.e., since it is worn on or near the hand), having the proper ID provided by the wearable NFC device **31** may be considered as a reliable indication that the mobile device **35** is in the possession of the authorized user(s). Moreover, in the case of a wearable NFC device **31** carried on a user's finger, for example, this places the wearable NFC device **31** in direct proximity (i.e., within NFC communication range of the second NFC transceiver **36)** when a user performs typical operations with the mobile device **35,** such as picking it up to carry it or to enter data via a keypad or touch screen, for example.

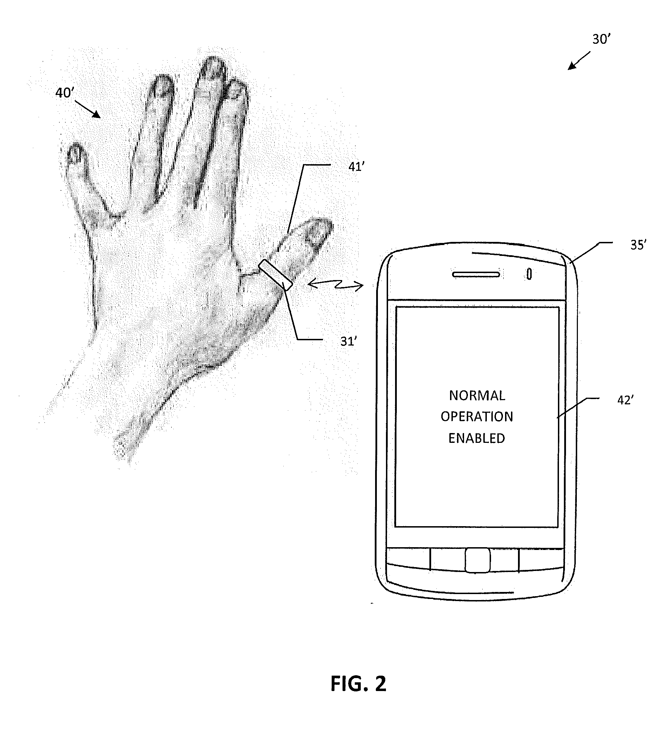

One such example of the system **30'is** shown in FIG. 2, in which the wearable NFC device **31'** is in the form of a ring worn on a user's hand **40'**, and more particularly a finger **41'** (here a thumb, although it may be worn on another finger as well). Accordingly, when the wearable NFC device **31'** comes within NFC communication range of the mobile device **35'**, a determination is made as to whether the wearable NFC device is being worn or not based upon its sensor (not shown in FIG. 2). By way of example, the sensor may comprise a temperature sensor, so that it may be determined if a measured temperature corresponds with a typical body temperature range (e.g., greater than 96°F (35.6°C)). In another example, the sensor may comprise a pressure sensor which is activated based upon the pressure applied by the finger **41'** when the wearable NFC device **31'** is securely positioned on the finger. Other suitable sensors may additionally or alternatively be used for determining positioning of the wearable NFC device **31'** on or adjacent to the hand, such as electrical sensors (e.g., electrodes or capacitive sensor), infrared sensors, etc.

A determination that the wearable NFC device **31'** is being worn on the hand **40'** may be performed in different ways. For example, in one embodiment the NFC control circuitry on board the wearable NFC device **31'** which controls NFC communications with the mobile device **35'** may read sensor data from the sensor (e.g., temperature reading, pressure reading, etc.), and communicate this reading to the mobile device so that the mobile device can make the determination as to whether the wearable NFC device is in fact being worn, as described above. Another approach is that the NFC control circuitry resident on the wearable NFC device **31'** may instead make this determination, and either communicate to the mobile device **35'** whether it is or is not being worn, or simply not respond to NFC communication from the mobile device if it determines that it is not being worn, for example.

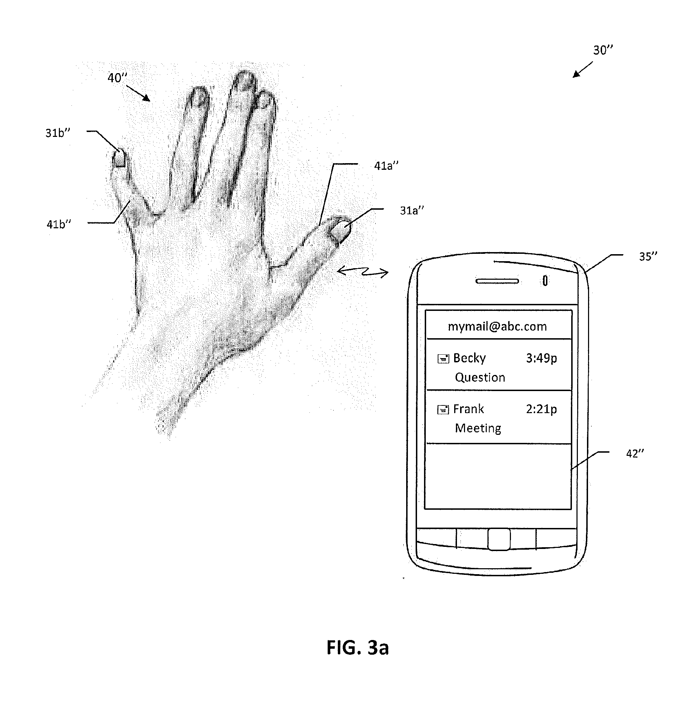

In the example illustrated in FIG. 2, the mobile device **35'** includes a display **42',** upon which a message "normal operation enabled" is displayed once the proximity of the wearable NFC device **31',** and the positioning of the wearable NFC device on the finger **41',** are established. However, a message need not be displayed in all embodiments, and the mobile device **35'** may proceed directly to a home screen or last active screen, for example, or proceed to a given mobile device operation assigned to the given wearable NFC device, as will now be described with reference to FIGS. 3a-4.

In this example embodiment of the system **30"** shown in FIGS. 3a-3b, two wearable NFC devices **31a"** and **31b"** take the form of fingernail tips which are respectively worn on fingers **41a"** (thumb) and **41b"** (pinky). By way of example, a fingernail tip wearable NFC device **31a"** may include a carrier or substrate layer **32"** (e.g., plastic, resin, etc. in the shape of a fingernail) in which the first NFC transceiver (and associated control circuitry) **33"** and the sensor **34"** are carried. More particularly, these components may be molded into the carrier layer **32",** or certain elements thereof may be printed with conductive ink or formed as conductive traces on a surface of the carrier layer, for example. An adhesive layer **43"** may be used to attach or couple the carrier layer **32"** to a respective fingernail, although it should be noted that the carrier layer may more generally take the form of a flexible sticker that may be positioned on a fingernail or other location on the hand **40",** for example.

In the present example, the wearable NFC device **31a"** has a first mobile device operation associated therewith, namely launching (or moving to the foreground) an email application or program. By way of example, the mobile device **35"** may allow for the unique ID of the wearable device **31a"** to also be associated with the email operation (such as through a menu navigation/selection process), so that when the wearable NFC device **31a"** comes within NFC communication range of the mobile device **35",** and a positive determination is made that the wearable NFC device is being worn based upon its sensor, then an email application is launched (or moved to the foreground, if already running) and shown on the display **42".** In the example shown in FIG. 3a, a mailbox for an email account "mymail@abc.com" is displayed, along with messages in the mailbox.

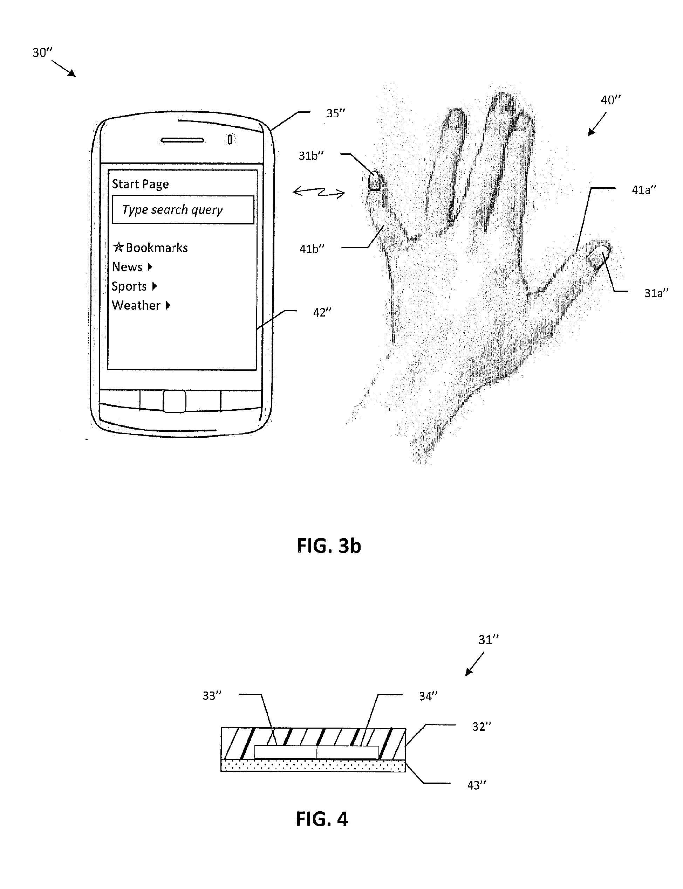

The wearable NFC device **31b"** is similarly associated with a different mobile device operation, which in the example of FIG. 3b is a Web browser. Thus, when the wearable NFC device **31b"** comes within NFC communication range of the mobile device **35"**, and a positive determination is made that the wearable NFC device is being worn based upon its sensor, then a Web browser application is launched (or moved to the foreground), so that a browser start page with a search bar and bookmarks list is shown on the display **42"**, although a different browser page may also be shown. The foregoing are just two examples of numerous applications or programs that may be launched, others examples of which may includes contacts, text messaging, media (e.g., pictures, videos, music, etc.), camera, maps, weather, etc.

In the above described example, the wearable NFC devices **31, 31', 31"** may be "programmed" or authorized for use with a respective mobile device **35, 35'**, **35"** by swiping and typing in a password, for example. The ID of the given wearable NFC devices **31, 31'**, **31"** may then be securely stored for future reference, and particular mobile device operations may also be associated therewith, as noted above. The password may thereafter not be required when that particular NFC tag is presented (although in some embodiments it may still optionally be used to switch the mobile device from the security mode to the normal operating mode, if desired). Moreover, the wearable NFC devices **31, 31'**, **31"** may similarly be de-authorized, such as in the case that it is lost, etc.

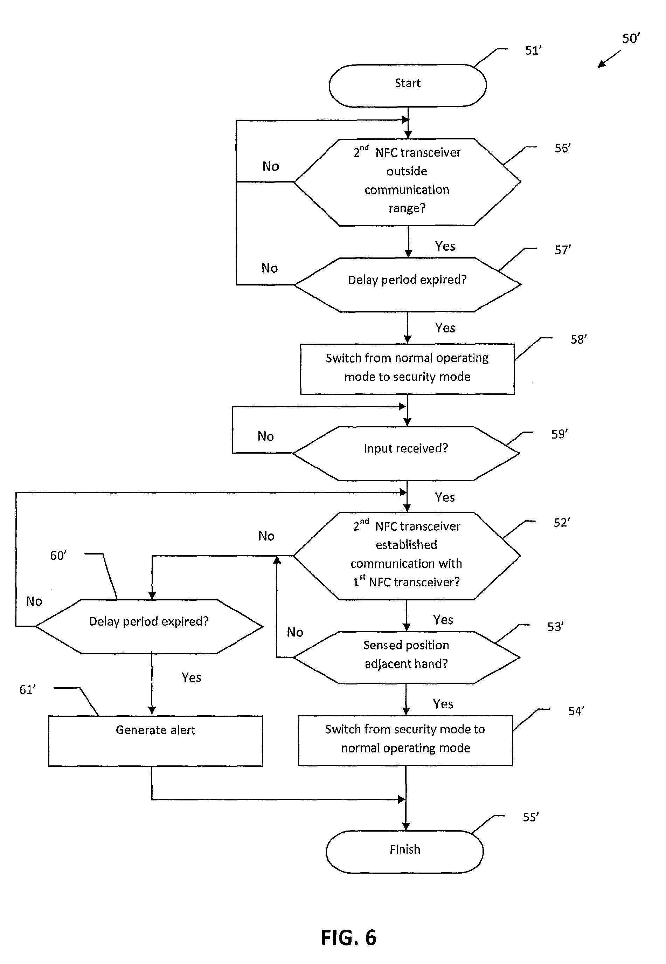

Referring now additionally to the flow diagram **50'** of FIG. 6, other optional operational features are described. The processor **37** may be further capable of switching from the normal operating mode to the security mode based upon the first NFC transceiver **33** being outside of a communication range of the second NFC device **36,** such as for a given delay period, at Blocks **56'**-**58'**. Thus, when the mobile device **35** is released from the hand wearing the wearable NFC device **31** into a pocket, to another person, or placed on a countertop, for example, it will be outside of the effective NFC communication rage of the second NFC transceiver **36.** If it remains outside of the effective communication for a given period of time (i.e., a delay period), then the processor **37** may accordingly switch to the security mode. The delay period may be configurable on the mobile device **35,** such as through menu selection and navigation, for example, or it could be a fixed duration.

Furthermore, the mobile device **35** may also include one or more input devices **38** (FIG. 1) coupled to the processor **37,** which are capable of or configured to receive an input, at Block **59'**. The processor **37** may be capable of or configured to switch from the security mode to the normal operating mode also based upon the input device **38.** Example input devices **38** may include touch screens, input keys or buttons, microphones, accelerometers, gyroscopes, compasses, light sensors, satellite position determining devices (e.g., GPS), etc. Thus, when the input device(s) **38** detects an input such as movement, data entry, direction change, a change in light level, etc., the processor **37** may then cause the second NFC transceiver to scan for the first NFC transceiver **33,** for example. As such, when the processor **37** is in the security mode, a detection of movement or attempt to use the mobile device **35,** if unaccompanied by NFC communication from the first NFC transceiver **33** and a determination from the sensor **34** that wearable NFC device **31** is being worn, may be considered as an unauthorized attempt to use or to steal the mobile device. As such, after an optional delay period (Block **60'**), an alert may be generated to indicate the unauthorized use or theft. For example, this may comprise an audible alert generated by the mobile device **35,** as well as a text or email alert sent to a designated recipient, at Block **61'**. The remaining steps illustrated at Blocks **51'**-**55'** are similar to those described above with respect to Blocks **51-55** of FIG. 5.

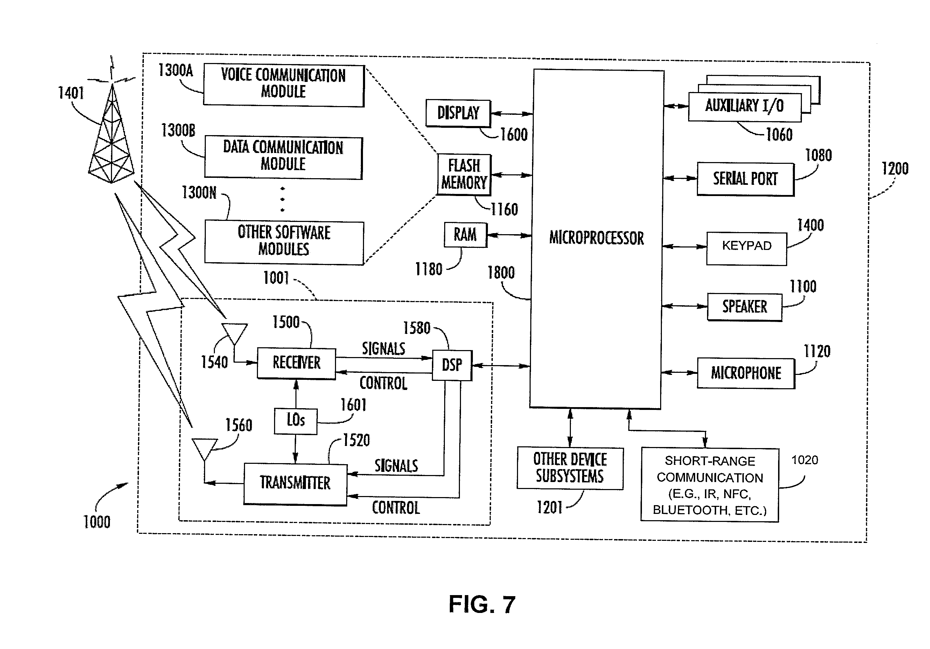

Example components of a mobile communications device 1000 that may be used in accordance with the above-described embodiments are further described below with reference to FIG. 7. The device **1000** illustratively includes a housing **1200,** a keyboard or keypad **1400** and an output device **1600.** The output device shown is a display **1600,** which may include a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, LTE, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A system including:
at least one wearable near field communication (NFC) device including
a carrier capable of being worn adjacent to a hand,
a sensor coupled to the carrier and capable of sensing positioning adjacent to the hand, and
a first NFC transceiver coupled to the carrier and the sensor; and
a mobile wireless communications device including
a second NFC transceiver capable of communicating with the first NFC transceiver, and
a processor coupled to the second NFC transceiver and being capable of switching from a security mode to a normal operating mode based upon the sensor sensing positioning adjacent the hand and the second NFC transceiver establishing NFC communication with the first NFC transceiver.

2. The system of Claim 1 wherein the sensor includes a temperature sensor.

3. The system of Claim 1 wherein the sensor includes a pressure sensor.

4. The system of Claim 1 wherein the carrier includes a ring.

5. The system of Claim 1 wherein the at least one wearable NFC device further includes an adhesive layer coupled to the carrier and capable of attaching the carrier to the hand.

6. The system of Claim 1 wherein the at least one wearable NFC device includes a plurality thereof each having a different mobile device operation associated therewith; and wherein the processor is capable of performing a respective mobile device operation upon switching to the normal operating mode for a given wearable NFC device within NFC communication range of the second NFC transceiver.

7. The system of Claim 1 wherein the mobile wireless communications device further includes an input device coupled to the processor and capable of receiving an input; and wherein the processor is capable of switching from the security mode to the normal operating mode also based upon the input device.

8. A mobile wireless communications device for use with at least one wearable near field communication (NFC) device including a carrier capable of being worn adjacent to a hand, a sensor coupled to the carrier and capable of sensing positioning adjacent to the hand, and a first NFC transceiver coupled to the carrier and the sensor, the mobile wireless communications device including:
a second NFC transceiver capable of communicating with the first NFC transceiver; and
a processor coupled to the second NFC transceiver and being capable of switching from a security mode to a normal operating mode based upon the sensor sensing positioning adjacent to the hand and the second NFC transceiver establishing NFC communication with the first NFC transceiver.

9. The mobile wireless communications device of Claim 11 wherein the processor is further capable of switching from the normal operating mode to the security mode based upon the first NFC transceiver being outside of a communication range of the second NFC device.

10. The mobile wireless communications device of Claim 8 wherein the processor is capable of switching from the normal operating mode to the security mode based upon the first NFC transceiver being outside of a communication range of the second NFC device and after a delay period.

11. The mobile wireless communications device of Claim 9 wherein the mobile wireless communications device further includes an input device coupled to the processor and capable of receiving an input; and wherein the processor is capable of switching from the security mode to the normal operating mode also based upon the input device.

12. The mobile wireless communications device of Claim 8 wherein the at least one wearable NFC device includes a plurality thereof each having a different mobile device operation associated therewith; and wherein the processor is capable of performing a respective mobile device operation upon switching to the normal operating mode for a given wearable NFC device within NFC communication range of the second NFC transceiver.

13. A method for using a mobile wireless communications device with at least one wearable near field communication (NFC) device including a carrier capable of being worn adjacent to a hand, a sensor coupled to the carrier and capable of sensing positioning adjacent to the hand, and a first NFC transceiver coupled to the carrier and the sensor, and the mobile wireless communications device including a second NFC transceiver capable of communicating with the first NFC transceiver, the method including:
establishing NFC communication between the second NFC transceiver and the first NFC transceiver; and
switching the mobile wireless communications device from a security mode to a normal operating mode based upon the sensor sensing positioning adjacent to the hand and the second NFC transceiver establishing NFC communication with the first NFC transceiver.

14. The method of Claim 13 wherein further including switching from the normal operating mode to the security mode based upon the first NFC transceiver being outside of a communication range of the second NFC device.

15. The method of Claim 13 wherein the at least one wearable NFC device includes a plurality thereof each having a different mobile device operation associated therewith; and wherein the method further includes performing a respective mobile device operation upon switching to the normal operating mode for a given wearable NFC device within NFC communication range of the second NFC transceiver.
